# EUROPEAN PATENT APPLICATION

(11) **EP 4 588 846 A1**
(43) Date of publication of application: **23.07.2025**
(21) Application number: 24153056.7
(22) Date of filing: 22.01.2024
(51) Int. Cl.: B65G 1/04

(54) **A SERVICE SYSTEM**

(71) Applicant: AUTOSTORE TECHNOLOGY AS, 5578 Nedre Vats (NO)
(72) Inventor: HEGGEBØ, Jørgen, 5578 Nedre Vats (NO); VIKINGSTAD, Geir, 5578 Nedre Vats (NO); MÜLLER, Kenneth, 5578 Nedre Vats (NO)
(74) Representative: Kilburn & Strode LLP

(57) **Abstract**

The disclosure relates to a service system for servicing an automated storage and retrieval system, wherein the service system comprises: a driving unit comprising a drive system for moving the driving unit on rails of a rail system; and a servicing unit configured to move on the rails of the rail system, wherein the driving unit and the servicing unit are configured to be removably coupled to one another, wherein the driving unit comprises a first door on a first side of the driving unit, wherein the servicing unit comprises a first entrance on a first side of the servicing unit, wherein the first door of the driving unit and the first entrance of the servicing unit are configured to overlap when the first side of the driving unit is coupled to the first side of the servicing unit, wherein the first door of the driving unit is configured to lock when the driving unit is not coupled to the servicing unit, wherein the first door of the driving unit is configured to unlock when the first side of the driving unit is coupled to the first side of the servicing unit for permitting movement of a person between the driving unit and the servicing unit, and wherein the servicing unit has one or more openings suitable for servicing infrastructure of the automated storage and retrieval system.

## Description

### TECHNICAL FIELD

The disclosure relates to a service system. More particularly, it relates to a service system for servicing an automated storage and retrieval system, and a method of servicing infrastructure of an automated storage and retrieval system using a service system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

To provide reliable operation of the automated storage and retrieval system, service personnel or a technician can carry out repair, maintenance, servicing, and monitoring on the system. For example, if a robotic container-handling vehicle has a malfunction, it may need to be removed from the automated storage and retrieval system for servicing. In some cases, issues that may arise in the automated storage and retrieval system can be resolved without the involvement of a person. However, in some cases, it maybe necessary or more efficient for a person to intervene directly in-situ by entering the automated storage and retrieval system. For example, goods stored in bins that may become dislodged, e.g., in the grid or on the rail system, can be removed manually by a person. It can be beneficial for a person to enter and service the automated storage and retrieval system while it is live, so that the automated storage and retrieval system can continue running while the problem is being addressed. However, additional considerations are needed when a person is servicing a live system to ensure a safe working environment is provided.

One known service vehicle comprises a vehicle pen for retrieving a robotic container-handling vehicle for service. Such a service vehicle may be limited in its ability to retrieve a robotic container-handling vehicle.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5A shows a service system comprising a driving unit and servicing unit suitable for use in the system of Fig. 1, and the robot of Fig. 3B and 3C.
Fig. 5B shows the servicing unit of the service system of Fig. 5A receiving the robot via an opening.
Fig. 5C shows the robot in a first area of the servicing unit of Fig. 5A.
Fig. 5D shows a person servicing the robot in the servicing unit of Fig. 5A.
Fig. 5E shows the service system of Fig. 5A in an alternative coupling configuration.
Fig. 6A shows a side view of power connectors and control signal connectors of the service system of Fig. 5A.
Fig. 6B shows a front view of a power connector and control signal connector of Fig. 6A.
Fig. 7 shows a flow diagram of a method of servicing an automated storage and retrieval system using the service system of Fig. 5A.
Fig. 8A shows a first mechanical lock assembly of the service system of Fig. 5A and 5E.
Fig. 8B, 8C, and 8D shows the operation of the lock assembly of Fig. 8A.
Fig. 9A shows a second mechanical lock assembly of the service system of Fig. 5A and 5E.
Fig 9B, 9C, 9D and 9E shows the operation of the lock assembly of Fig. 9A.
Fig. 10A shows a mechanical and electrical combination lock assembly of the service system of Fig. 5A and 5E.
Fig. 10B, 10C, 10D, and 10E shows the components of the mechanical and electrical lock mechanism of Fig. 10A.

### DETAILED DESCRIPTION

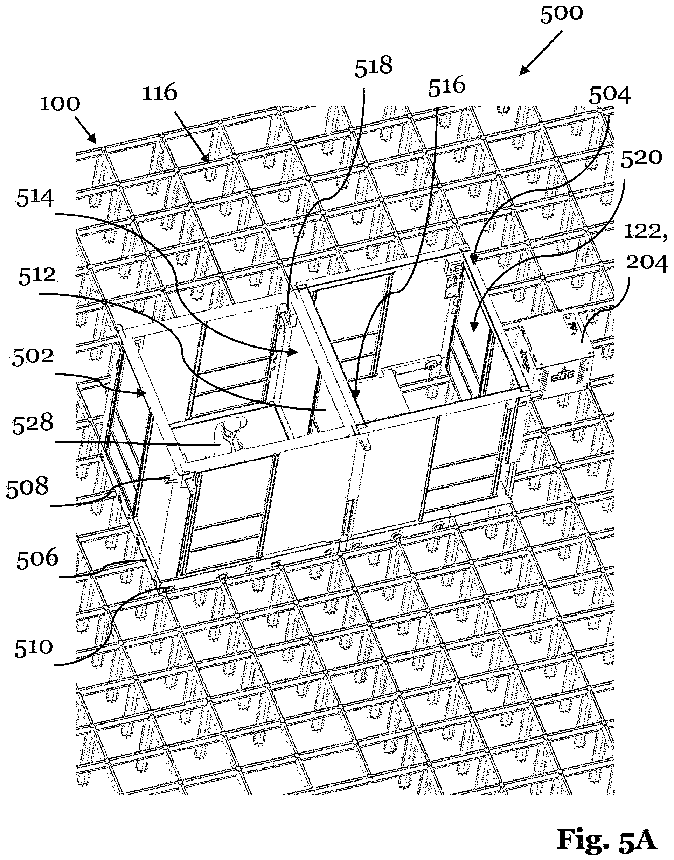

In overview, the disclosure relates to a service system for servicing an automated storage and retrieval system comprising a driving unit and a servicing unit, which are configured to be removably coupled to one another. The servicing unit provides a working area for a person to carry out servicing, maintenance, repair, or monitoring of infrastructure of the automated storage and retrieval system. Such infrastructure may include light fixtures, robotic container handling vehicles, chargers for robotic container handling vehicles, the rail system, the grid, wall panels, etc. As will be discussed in detail below with reference to Fig. 5A to 7, the servicing unit has one or more openings suitable for servicing infrastructure of the automated storage and retrieval system. The one or more openings provide access for a person to service the infrastructure of the automated storage and retrieval system.

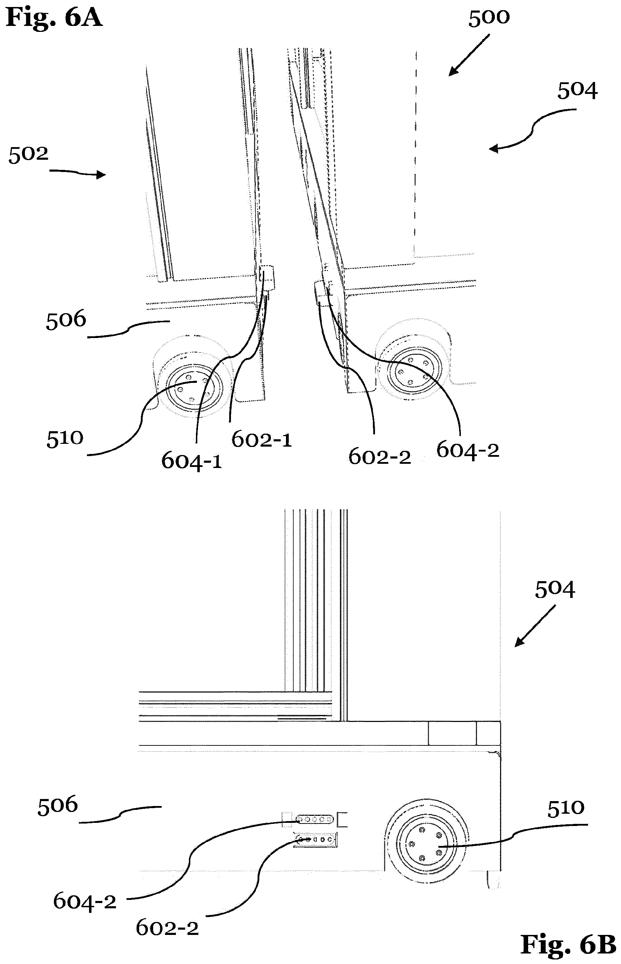

The driving unit which comprises a drive system for moving on rails of a rail system may be used to move the servicing unit on the rails of the rail system towards infrastructure for servicing. By removably coupling the driving unit and the servicing unit together in this way, different coupling configurations between the driving unit and the servicing unit can be enabled. This enables the one or more openings of the servicing unit to be used more effectively to service the infrastructure of the automated storage and retrieval system, as will be discussed herein. The driving unit may be controlled by a person within the driving unit itself, however, they can also be controlled by the automated storage and service system, as will be discussed in detail with reference to Fig. 6A and 6B. Also discussed in relation to Fig. 6A and 6B are further details relating to the drive system, power connectors, control signal connectors, and the operation of the various components of the driving unit and servicing unit.

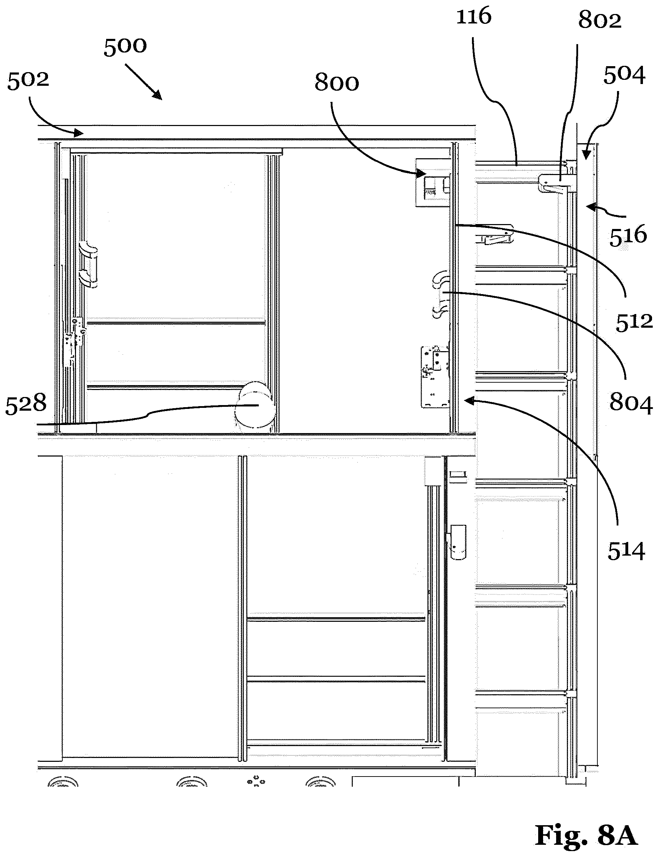

When the driving unit and servicing unit are coupled together and a door or entrance of the driving unit is overlapping with a door or entrance of the servicing unit, a person can move between the driving unit and the servicing unit to service the infrastructure that requires servicing. The driving unit and servicing unit provides a safe environment to the person within the automated storage and retrieval system, especially while the automated storage and retrieval system is live. Doors and corresponding locks to the doors may be used to further improve the safety of the person, as will be discussed further herein. Several examples of locking assemblies and mechanisms are discussed in detail with reference to Fig. 8A to 10E. Also disclosed are details relating to the control of the driving unit to move both itself and the servicing unit to different locations/positions on the rail system, couple in different coupling configurations, and to operate the various components of the driving unit and servicing unit. Accordingly, a more safe, controllable, and effective service system is provided.

### Automated storage and retrieval system overview

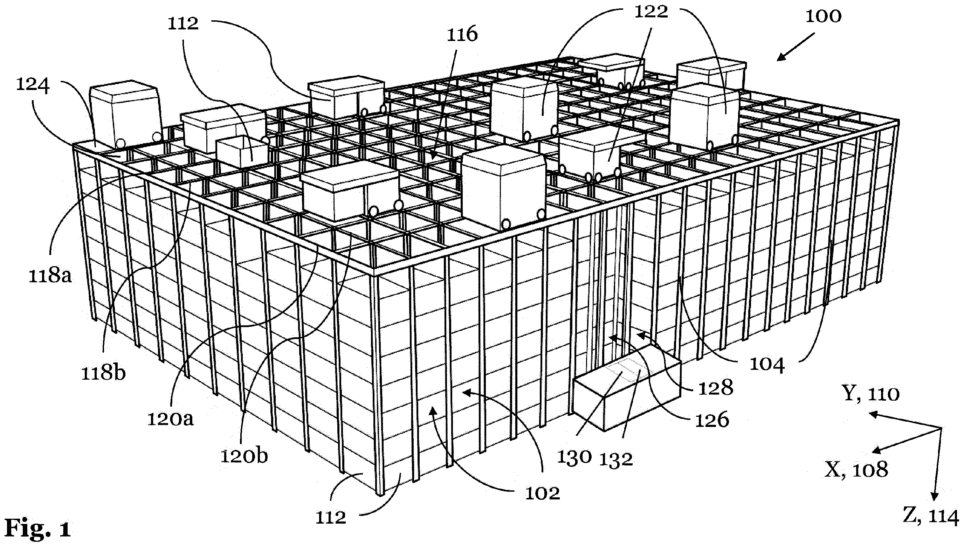

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

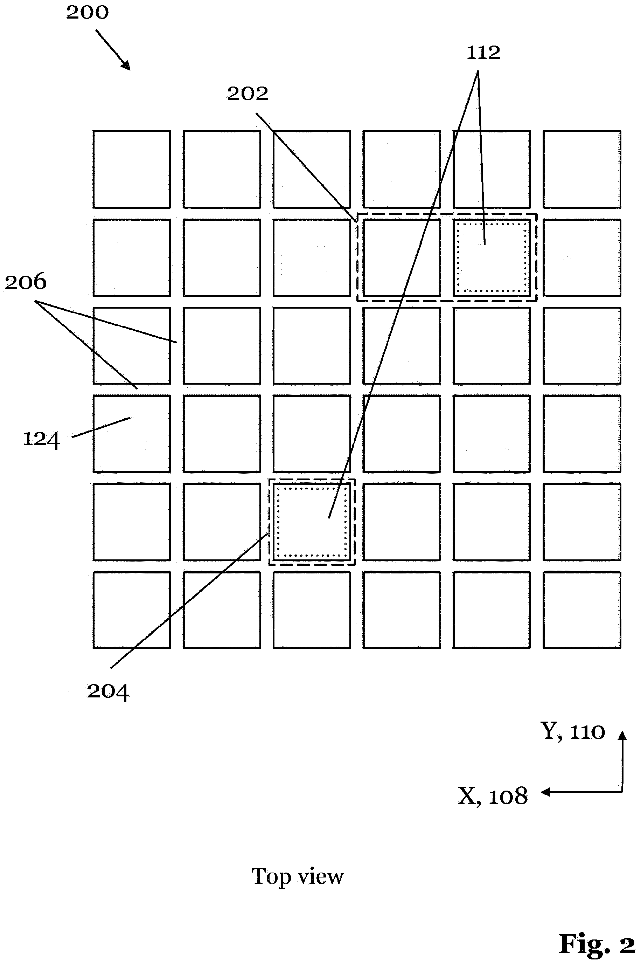

Referring to the example embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

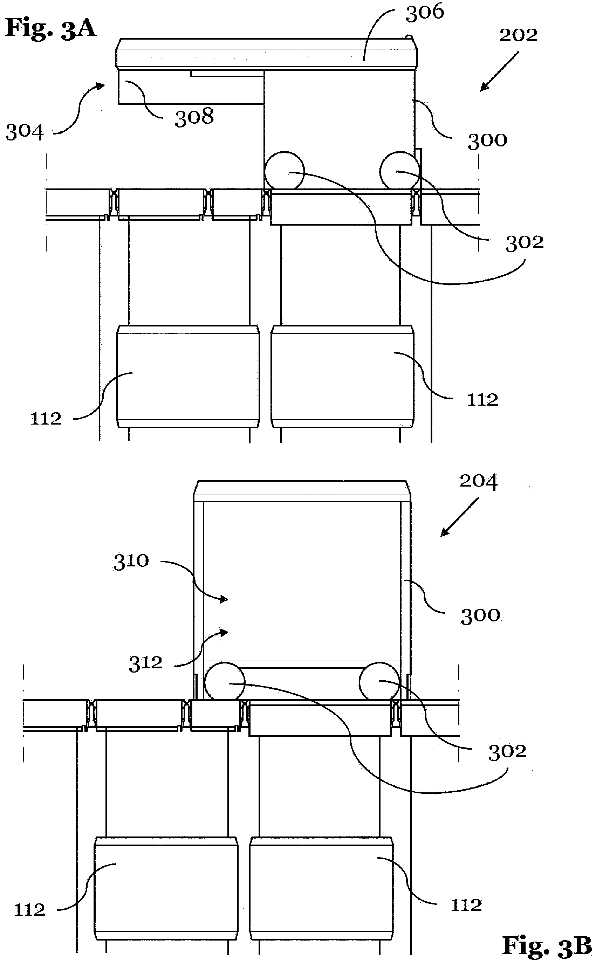

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

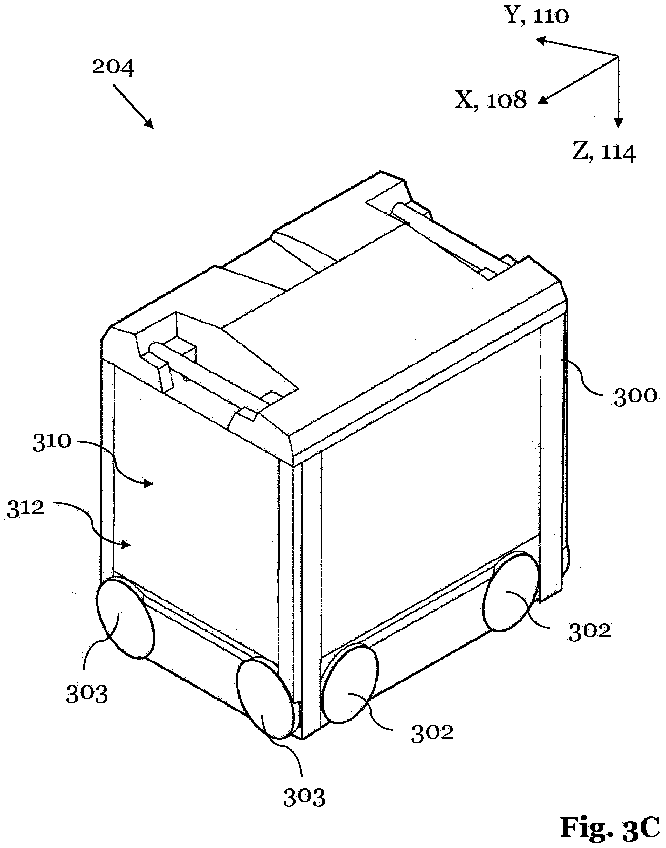

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

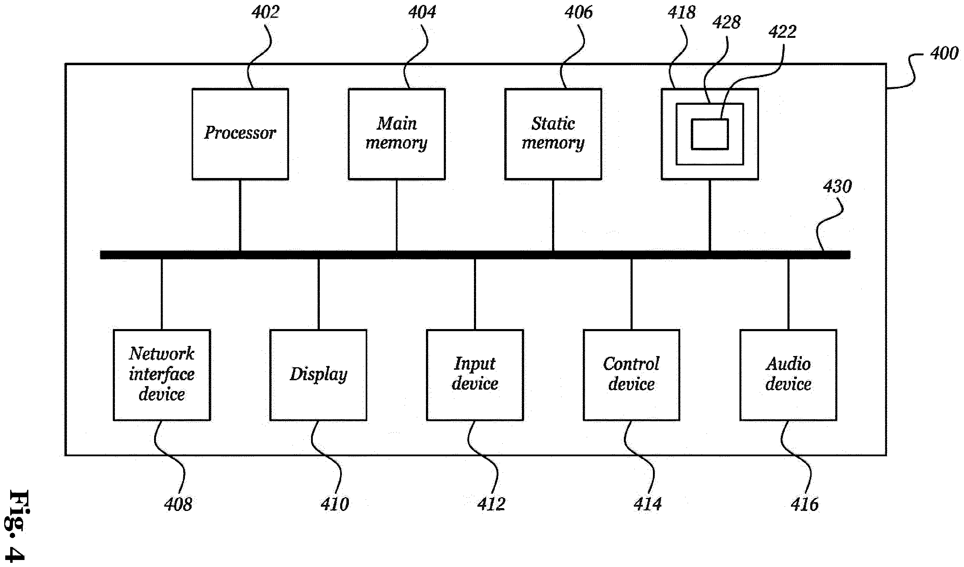

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quick-response code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### The service system

Referring to the embodiment shown in Fig. 5A to 5E, a service system 500 is depicted. The service system 500 comprises a driving unit 502 and a servicing unit 504 for servicing an automated storage and retrieval system. Also depicted in Fig. 5A to 5E is a robotic container-handling vehicle 122, such as the 'internal cavity' type robot 204 shown in Fig. 3B and Fig. 3C. The driving unit 502 comprises a drive system 506 for moving the driving unit 502 on rails of a rail system 116 on top of the grid 100. The driving unit 502 and servicing unit 504 comprises docking probes 508. Additionally, the driving unit 502 and servicing unit 504 comprises wheels 510 for moving on rails of the rail system 116. The driving unit 502 comprises a first door 512 on a first side 514 of the driving unit 502, and doors on other sides of the driving unit 502. The servicing unit 504 comprises an entrance (not shown) on a first side 516 of the servicing unit 504 and openings on other sides of the driving unit 502, such as opening 520 suitable for receiving the robot 122, 204 from the rail system 116. Also in Fig. 5A to 5E are locking assemblies or mechanisms 518 on each side of the driving unit 502.

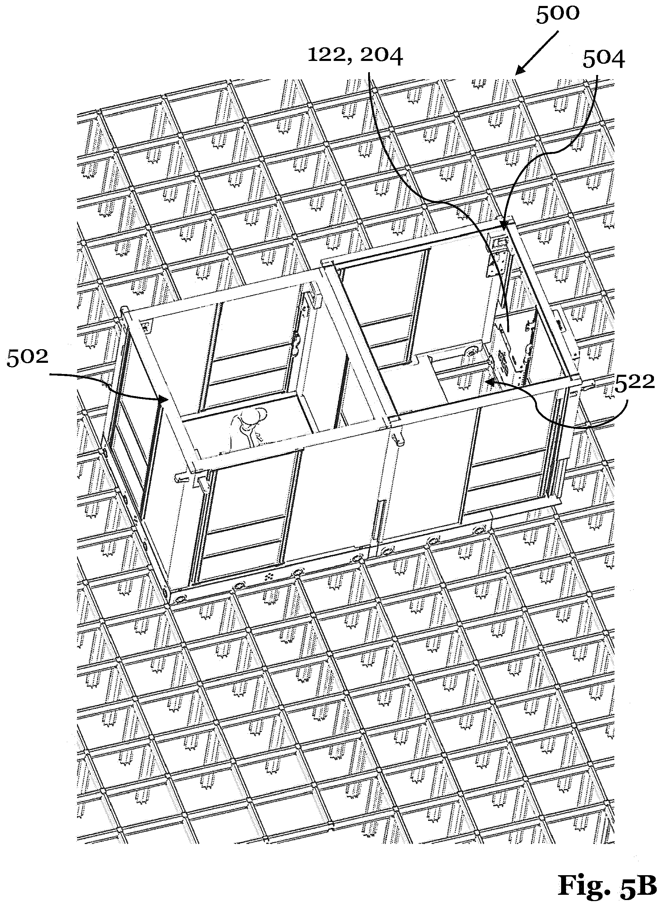

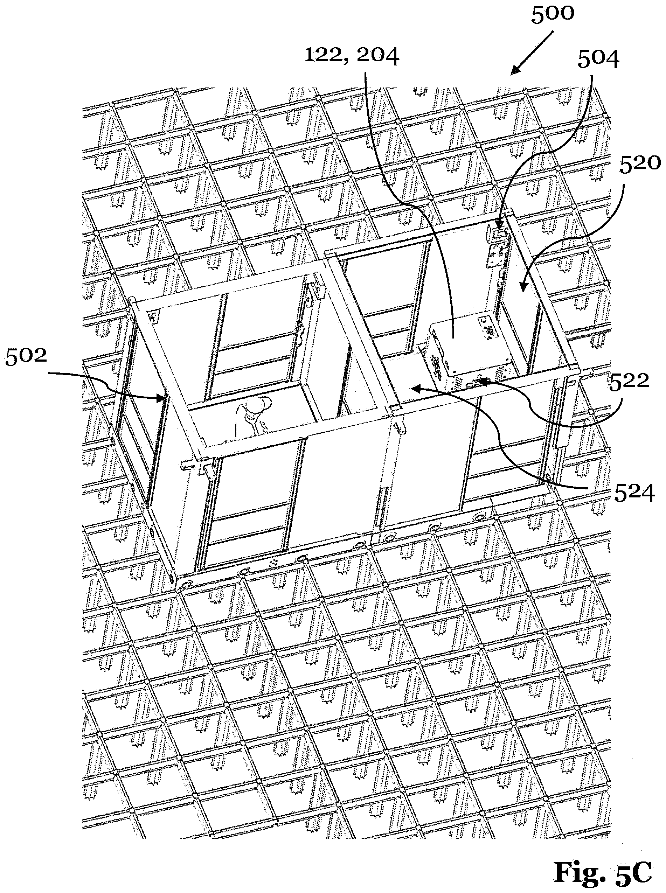

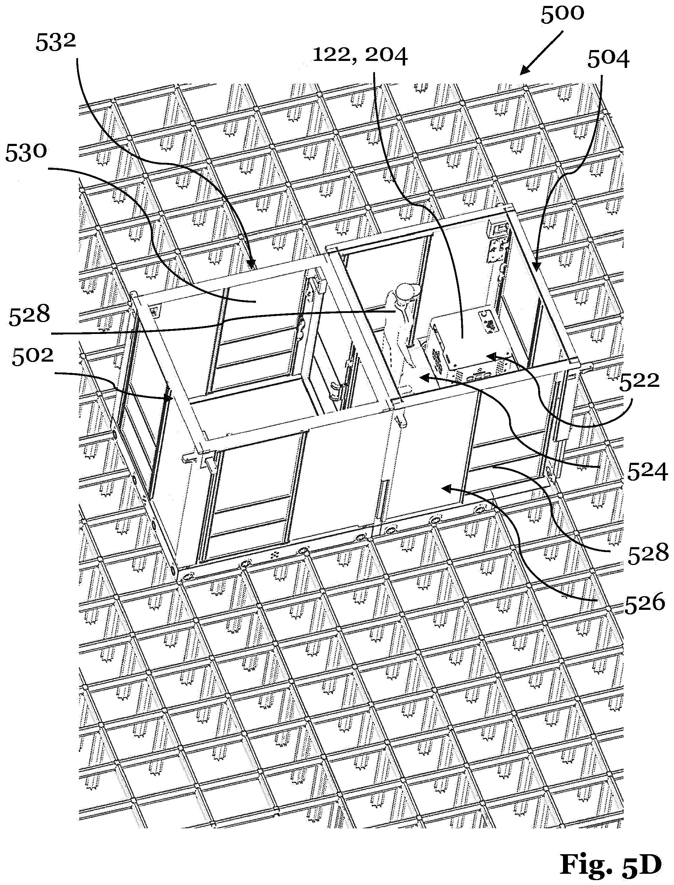

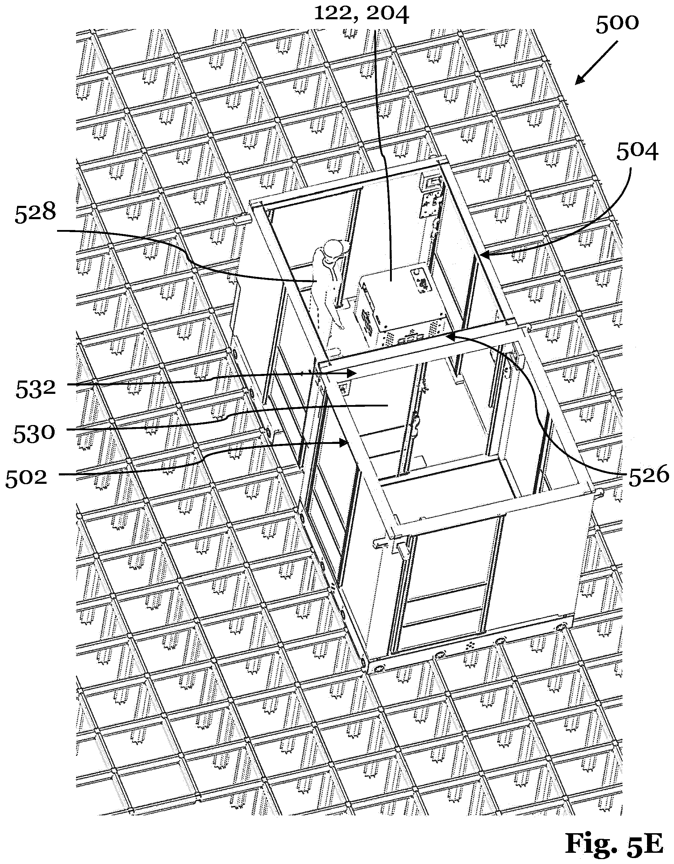

More particularly, Fig. 5A shows a service system 500 comprising a driving unit 502 and servicing unit 504 suitable for use in the system of Fig. 1, and the robot 122, 204. Fig. 5B shows the servicing unit 504 of the service system 500 of Fig. 5A receiving the robot 122, 204 via an opening 520. Fig. 5C shows the robot 122, 204 in a first area 522 of the servicing unit 504. Fig. 5D shows a person 528 servicing the robot 122, 204 in the servicing unit 504. Fig. 5E shows the driving unit 502 and servicing unit 504 of the service system 500 of in an alternative coupling configuration.

The driving unit 502 is removably coupled to the servicing unit. In some implementations, coupling is physical contact between the driving unit 502 and servicing unit. In some implementations, one or more docking probes 508 are used on one or more sides to couple the driving unit 502 and the servicing unit together. The docking probes 508 can function to secure both units to each other by the insertion of one docking probe 508 from one unit at least partially into another.

As will be apparent to the skilled person, other methods of coupling a driving unit 502 and a servicing unit 504 to secure both to each other may be used, such as retractable/extendable members, bolts, latches, hooks, and/or electromagnetic or magnetic systems. In some implementations, the aforementioned methods of coupling the driving unit 502 and servicing unit 504 may be used to alternatively or further secure the driving unit 502 and/or the servicing unit 504 to the rail system 116. In this way, the driving unit 502 and servicing unit 504 can be coupled via being secured to the rail system 116 in close proximity with each other. For example, support members may be lowered towards to the rail system 116, to 'park' or 'anchor' the driving unit 502 and servicing unit 504 to the rail system 116. In another example, wheels 510 on each unit maybe locked to prevent movement on the rail system 116. As will be apparent to the skilled person, any combination of the aforementioned methods may be used to removably couple the driving unit 502 to the servicing unit 504.

At least one door/entrance on a side of the driving unit 502 and at least one door/entrance on a side of the servicing unit 504, may be configured to partially or completely overlap when the side of the driving unit 502 is coupled to the side of the servicing unit 504. A door is a movable barrier that allows entry and exit of a person 528. A door can be optionally lockable (and unlockable). An entrance is doorless passage, allowing entry and exit of a person 528 without limitation. For example, the first door 512 on the first side 514 of the driving unit 502 may overlap with the entrance on the first side 516 of the servicing unit 504. When the door and entrance are at least partially overlapping (and the door is opened), a person 528 can safely move between the driving unit 502 and the servicing unit 504. In some implementations, the door and entrance may be required to overlap completely or substantially completely so as to not allow a person 528 to move outside the driving unit 502 or servicing unit 504. There may be one or more doors/entrances on one or more sides of the driving unit 502 and/or servicing unit 504. This can enable alternate coupling configurations for a person 528 to move between the driving unit 502 and the servicing unit 504.

As discussed, in some implementations, entrances may be used instead of or in addition to doors. In the example embodiment of Fig. 5A, the entrance on the first side 516 of the servicing unit 504 enables a person 528 to move between the driving unit 502 and the servicing unit 504 requiring only the opening (and unlocking) of door 512. The choice of whether to use a door in place of a doorless entrance can depend on circumstances, such as safety requirements, specific desired coupling configurations, the number of doors/entrances on each side, and where the doors/entrances on the driving unit and the servicing unit 504 are placed. For example, to improve safety, the driving unit may need to have doors, rather than entrances, on all sides of the driving unit, such as driving unit 502 which has doors on each of the four sides. However, if the driving unit 502 were to be secured with the servicing unit 504 in the configuration shown in Fig. 5A to 5D, the driving unit 502 could instead use an entrance on the first side 514 to replace the first door 512. In some implementations, entrances could be used in lieu of doors completely if the service system is used when the automated storage and retrieval system is not live, as in this scenario the lack of doors may not be a safety concern. Accordingly, the choice to implement one or more doors, one or more entrances, on one or more sides of the driving unit 502 or servicing unit 504 can be flexibly configurable.

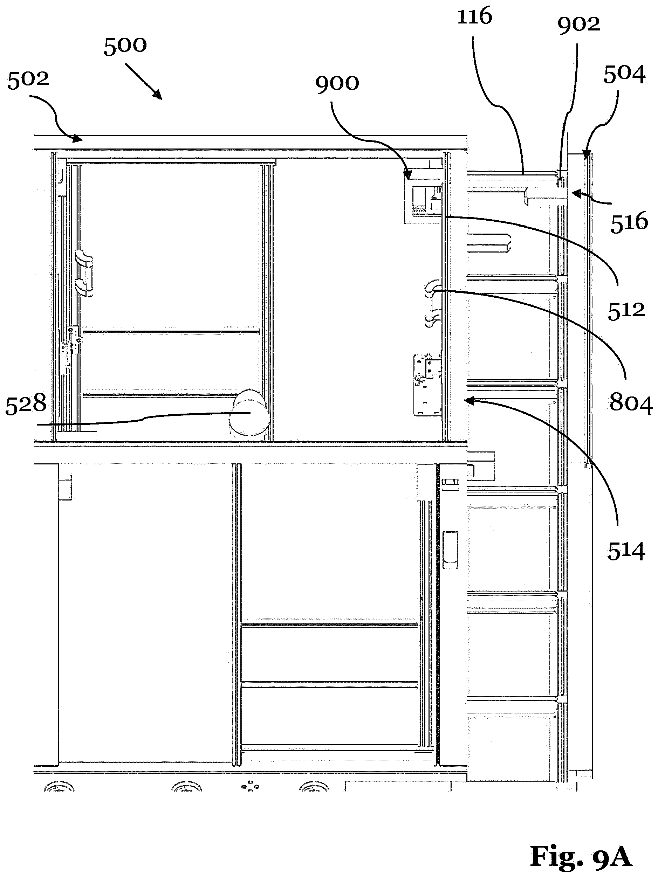

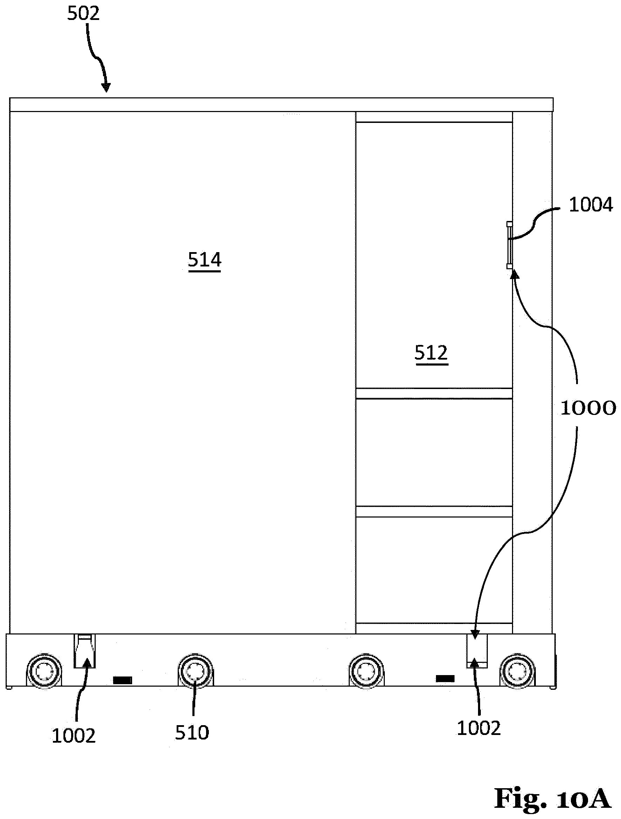

The one or more doors of the driving unit 502 can be configured to lock when the driving unit 502 is not coupled to the servicing unit 504 and configured to unlock when the driving unit 502 is coupled to the servicing unit 504. Each of the one or more doors can be locked and unlocked independently. The respectively locking and unlocking of the one or more doors can also be conditional on whether the respective door overlaps with an entrance of the servicing unit 504. As will be apparent to the skilled person, the unlocking or locking of the doors can be implemented electrically and/or mechanically and controlled in a variety of ways. This is further discussed in detail in relation to Fig. 8A to 10E. In particular, Fig. 8A to 8D and Fig. 9A to 9E discloses a mechanical lock assembly that uses the docking probes 508, which can be used for coupling the driving unit 502 and servicing unit 504 together, for locking and unlocking doors. In some implementations, as will be described in relation Fig. 10A to 10E, components such as sensors 1010, e.g., proximity, laser, electromagnetic sensors may also be used in combination with a mechanical lock and electrical lock to form an electrical and mechanical combination lock assembly.

The one of more openings suitable for servicing infrastructure of the automated storage and retrieval system refers to any opening that can be tailored towards the specific infrastructure that requires servicing, maintenance, repairing, or monitoring. The one or more openings can be situated on one or more sides of the servicing unit 504. In some implementations, the opening suitable for receiving a robotic container handling vehicle 122, 204 from the rail system 116 may be, e.g., a gate or a door on a side of the servicing unit 504 (see, e.g., opening 520). In some implementations, an opening suitable for repairing a light fixture may be, e.g., a hatch located on the ceiling of the servicing unit 504. In some implementations, an opening suitable for performing maintenance on a wall panel may be, e.g., a sliding window or door on a side of the servicing unit 504. In some implementations, an opening suitable for inspecting, servicing or removing obstacles from the rail system 116 can be, e.g., a trapdoor located on the floor of the servicing vehicle. As will be apparent to the skilled person, a suitable opening can vary depending on the specific infrastructure to be serviced and need not be limited to a specific implementation. Accordingly, the servicing unit 504 may comprise one or more openings which can differ from each other and can be selected corresponding to the respective infrastructure to be serviced.

The driving unit 502 and servicing unit 504 can have different aspect ratio and dimensions to each other. The dimensions of the driving unit 502 and the servicing unit 504 can be adapted to the rails of the rail system 116. For example, the driving unit 502 and/or servicing unit 504 can be of a dimension that corresponds to the vehicle rails or tracks 118a, 188b in the X direction and 120a, 120b in the Y direction. In some implementations, the driving unit 502 and/or servicing unit 504 has a width and/or length that corresponds to an integer of the distance/spacing between rails 206 on the grid 100. For example, as depicted in Fig. 5A to 5E, the driving unit 502 and servicing unit 504 are of the same aspect ratio and have a width of three rail 206 'spacings' and a length of four rail 206 'spacings'. By configuring the driving unit 502 and/or servicing unit 504 in this way, efficient usage the rail system 116 is enabled.

In some implementations, the servicing unit 504 (and optionally the driving unit 502) can be adapted to the infrastructure to be serviced. For example, if the infrastructure to be serviced is a light fixture above the rail system 116, the roof of the servicing unit 504 can be removed (as shown in Fig. 5A-5E) to provide improved viewability and access. In another example, if a robot 122, 204 is to be received into the servicing unit 504 for servicing, the servicing unit 504 can be designed to receive a robot 122, 204 from the rail system 116 on one side via the vehicle pen (e.g., Fig. 5A to 5E), or optionally, additionally on other sides (and in some cases all sides) of the servicing unit 504. Additionally, in some implementations, the dimensions of the servicing unit 504 can be further configured/designed to provide a suitable working area for the person 528 (e.g., sufficient room to provide the person 528 with access to the robot 122, 204 on one or more sides). In some implementations, equipment or tools specific for servicing specific infrastructure of the automated storage and retrieval system can be installed or equipped in the servicing unit 504. Similar to the aforementioned described openings suitable for servicing the infrastructure of the automated storage and retrieval system, the dimensions of the servicing unit 504 can be adapted towards the specific infrastructure that requires servicing, maintenance, repairing, or monitoring.

In some implementations, the driving unit 502 and servicing unit 504 can be adapted to structural elements of the warehouse and/or infrastructure of the automated storage and retrieval system. For example, if the grid is built around obstacles that are of a specific width apart from each other (e.g., structural support columns in the warehouse, robot 122, 204 charger placements, etc.), the driving unit 502 and servicing unit 504 can be of a width that is less than or equal to the minimum width of the obstacles. Similarly, if the available height between the rail system 116 and the ceiling of the warehouse is limited, the driving unit 502 and servicing unit 504 can be of a height that is less or equal to the maximum available height. In this way, the driving unit 502 and servicing unit 504 can be adapted to both the infrastructure it is servicing and the environment in which it is moving, thereby improving the functionality and reach of the service system.

The service system may comprise multiple driving units and servicing units, which can as previously mentioned, each be adapted to the rails of the rail system 116, infrastructure to be serviced, structural elements of the warehouse and/or to infrastructure of the automated storage and retrieval system. In some implementations, there can be a different number of servicing units to driving units. For example, a single driving unit 502 can be used with a number of servicing units that are adapted for servicing different infrastructure, enabling efficient utilisation of resources by reusing the single driving unit 502 on different servicing jobs (on different infrastructure).

In some implementations, the servicing unit 504 adapted or suitable to receive a robot 122, 204 from the rail system 116 may comprise a first area or volume of the servicing unit 504 as a receiving area for a robot 122, 204 from the rail system 116. For example, as shown in Fig. 5A to 5E, the servicing unit 504 comprises an area with a removed floor portion of the servicing unit 504 to act as a vehicle pen, which can be considered the first area 522. In some implementations, the servicing unit 504 may further comprise a second area or volume of the servicing unit 504 for receiving the robot 122, 204 from the first area 522 with the robot 122, 204 moved off the rail system 116. In some implementations, the second area or volume of the servicing unit 504 may be a platform that is elevates the robot 122, 204 off the rail system 116 to provide improved access to the robot 122, 204 for servicing. In Fig. 5A to 5E, the second area 524 maybe the floor 524 of the servicing unit 504 next to the first area 522. In some implementations, a ramp or lift system (not shown) may be used to move the robot 122, 204, e.g., automatically, from the first area 522 to the second area 524. In some implementations, the servicing unit 504 can include sensors, such as proximity, infrared, laser, mm-wave, etc. to track the position of the robot 122, 204. For example, sensors could be used to check that the robot 122, 204 has been positioned in the first area 522 to trigger opening of a gate to the second area 524, as discussed herein.

In some implementations, the servicing unit 504 comprises a first gate to control passage of a robot 122, 204 from outside the servicing unit 504 into the first area 522. In some further implementations, the servicing unit 504 comprises a second gate to control passage of the robot 122, 204 from the first area 522 to the second area 524. An opening 520 of the one or more openings may in some implementations take the place of the first gate. The first gate and the second gate enable improved safety by controlling passage/ limiting movement of the robot 122, 204, such that it may not enter the first area 522 via the first gate until permitted and likewise may not move between the first and the second area 524 via the second gate when not permitted. As will be apparent to the skilled person, the first gate and/or second gate may be any movable barrier, including being substantially identical or identical to the one or more openings discussed herein. For example, as shown in Fig. 5A to 5E, the opening 520 may be the first gate which controls passage of the robot 122, 204 from outside the servicing unit 504 into the first area 522.

In addition to the aforementioned adaptability of the driving unit 502 and the servicing unit 504, the one or more doors/entrances on the one or more sides of the servicing unit 504 and/or driving unit 502 can enable different coupling configurations between the servicing unit 504 and the driving unit 502, permitting/suitable for a person 528 to move between the driving unit 502 and the servicing unit 504 in different ways. The coupling of the driving unit 502 and servicing unit 504 in alternate coupling configurations enables the one or more openings suitable for servicing infrastructure to be better aligned to the infrastructure to be serviced. In some implementations, equipment or tools specific for servicing specific infrastructure of the automated storage and retrieval system that have been installed or equipped in the servicing unit 504 can also be aligned by coupling the driving unit 502 and servicing unit 504 in different configurations. Alignment refers to how one entity is oriented and positioned with respect to another entity's orientation and position. Aligning to the infrastructure to be serviced may refer to orientating and positioning , e.g., an opening 520 of the one or more openings, to a new orientation and position with respect to, e.g., a robot 122, 204. An improved or better alignment refers to an orientation and position that enables a person 528 to service infrastructure that could not previously be accessible to the person 528. In some implementations, a better or improved alignment refers to an orientation and position that enables a person 528 to access the infrastructure more easily (e.g., in a better angle, position or orientation), or enables the person 528 to reduce the time needed to service the infrastructure.

For example, referring to Fig. 5A to 5D, the depicted coupling configuration of the driving unit 502 to the servicing unit 504, in which the first side 514 of the driving unit 502 is coupled to the first side 516 of the servicing unit 504 may not be available, e.g., due to the hypothetical presence of an obstacle at the current position of the driving unit 502. In this case, the driving unit 502 may need to alternatively couple to the second side 526 of the servicing unit 504, as depicted in Fig. 5E. That is, in addition to enabling a person 528 to move between the driving unit 502 and the servicing unit 504 when the first side 514 of the driving unit 502 is coupled to the first side 516 of the servicing unit 504, a person 528 can move between the driving unit 502 and the servicing unit 504 via a second door 530 on a second side 532 of the driving unit 502 and a second door 528 on a second side 526 of the servicing unit 504, wherein the second doors are configured to overlap when the second side 532 of the driving unit 502 is coupled to the second side 526 of the servicing unit 504. As will be apparent to the skilled person, in some cases, the opening 520 of the one or more openings can also be used as doors or entrances for a person 528 to move between the driving unit 502 and servicing unit 504, which can utilise the same locking and unlocking methods, control and assemblies discussed herein in relation to the doors.

To couple the driving unit 502 and the servicing unit 504 in different configurations, the driving unit 502 of the service system 500 maybe used, which comprises a drive system 506 suitable for driving/moving the driving unit 502 on rails of a rail system 116 above the storage columns, and to different positions/locations on the rail system 116. In some implementations, the servicing unit 504 is configured to move passively on the rails of the rail system 116 via pushing or pulling of the servicing unit 504 by the driving unit 502. In this way, the servicing unit 504 is movable on the rail system 116 using the driving unit 502. In some implementations, the servicing unit 504 is configured to have a drive system 506 enabling the servicing unit to drive on the rails of the rail system 116 like the driving unit 502. Details relating to the drive system 506 of the driving unit 502 (and servicing unit) as well as how they are controlled by the person 528 in the driving unit 502, or in some cases additionally or alternatively controlled remotely by the automated storage and retrieval system (such as processing system 400 of Fig. 4), is discussed in more detail in relation to Fig. 6A and 6B.

The aforementioned one or more openings, doors, locks, and gates can be opened and closed automatically and/or manually. In particular, as shown in Fig. 5B and 5C, the opening 520 for receiving the robot 122, 204 was respectively opened and closed while the person 528 was in the driving unit 502. In some implementations, as will be discussed in more detail in relation to Fig. 6A and 6B, the operation of the openings of the one or more openings, doors, locks, and gates may be controllable by the person 528 in the driving unit 502 manually. In some cases, they can be additionally or alternatively controlled remotely by the automated storage and retrieval system (such as by processing system 400 of Fig. 4). In some cases, they can be fully or partially controlled, by a computer on the driving unit 502 to assist the person 528 in the driving unit 502.

### Power connectors and control signal connectors

Referring to the example embodiment shown in Fig. 6A and 6B, power connectors 602-1, 602-2 and control signal connectors 604-1 604-2 are depicted of service system 500. Fig. 6A shows a side view of the driving unit 502 and servicing unit 504, while Fig. 6B shows a front view of servicing unit 504. In some implementations, the power connector 602-1 and the control signal connector 604-1 on the driving unit 502 is respectively connected to the power connector 602-2 and the control signal connector 604-2 on the servicing unit 504.

The power connector may serve as means to provide power from the driving unit 502 to the servicing unit 504 to enable functionality of the servicing unit 504, such as powering a drive system 506 of the servicing unit 504 for movement on the rail system 116. In some implementations, the driving unit 502 may also provide power to the servicing unit 504 to automate the opening of doors, openings, locks, gates, etc., on the servicing unit 504. For example, this may also include providing power to the equipment or tools for servicing the infrastructure of the automated storage and retrieval system.

Similarly, in some implementations the driving unit 502 can provide, via the control signal connector, signals to control the drive system 506 of the servicing unit 504 and therefore the movement of the servicing unit 504 on the rail system 116. In some implementations, the signals can also include signals to operate, e.g., open, close, lock, unlock, turn on, turn off, etc., any of the aforementioned components, such as doors, openings, locks, gates, equipment or tools in the servicing unit 504, lifts, etc. In this way, the servicing unit 504 can be without processing hardware and/or a power supply in the unit and reliant on the driving unit 502 for both power and control. That is, the servicing unit 504 be configured to drive on the rails of the rail system 116 and/or operate using power and control signals received from the driving unit 502.

The driving unit 502 may have a stored power supply, such as a battery, in order to provide power to the servicing unit 504. The power supply may also be used to power the driving unit's own drive system 506 in order to move on the rails of the rail system 116. In some implementations, the driving unit 502 can alternatively or additionally be powered by a physical connection, e.g., connected via a cable to the mains electricity, or provided power via wireless power transfer, such as via electromagnetic radiation or induction. In some implementations, the servicing unit 504 can have the same stored power supply (but may optionally still receive the control signals from the driving unit 502), such that it does not need to be reliant on the driving unit 502 for power to move on the rail system 116, and can use its own power supply to operate any of the aforementioned components, such as doors, openings, locks, gates, equipment or tools in the servicing unit 504, lifts, etc.

The power and control signals received from the driving unit 502 by the servicing unit 504 can be connected via a physical connection, e.g., cables. For example, as depicted in Fig. 6A and 6B via connectors 602-1, 602-2, 604-1, 604-2. In some implementations, the power and/or control signals are transferred/communicated between the driving unit 502 and servicing unit 504 wirelessly, e.g., via electromagnetic radiation or induction. For example, control signals can be communicated over Wi-Fi, Bluetooth, radio frequencies, etc., via transmitters and receivers. In another example, power may be transferred wireless via a laser system. There can be a plurality of power and control signal connections/connectors between the driving unit 502 and the servicing unit 504 (or in the case of wireless transfer, a plurality of transmitters and receivers). This can enable improved transfer of power, increased bandwidth and reliability. This can also enable the driving unit 502 and servicing unit 504 to be connected even in different coupling configurations. For example, referring to system 500, there may be a power and a control signal connector on each side of the driving unit 502 and servicing unit 504.

Now turning to the power connector and control signal connectors depicted in Fig. 6A and 6B in more detail. In some implementations, a male and female system of connecting the power and/or control signal connectors may be used. For example, as shown in Fig. 6A, the placement/housing of the power connector 602-1 may protrude less than the control signal connector 604-1 on the driving unit 504, while the placement/housing of the power connector 602-2 and control signal connector 604-2 may be the reverse on the servicing unit 504 (the power connector protrudes more than the control signal connector). Providing corresponding male and female connectors can avoid connectors from being mated incorrectly.

As discussed, in some implementations, the servicing unit 504 may be configured to move passively on the rails of the rail system 116. Move 'passively' refers to the inability of the servicing unit 504 to move independently by itself without the assistance of the driving unit 502. In some implementations, the driving unit 502 may move the servicing unit 504 on the rail system 116 'passively' by pushing or pulling the servicing unit 504. As will be apparent to the skilled person, the driving unit 502 can be coupled to the servicing unit 504 in any number of ways, such as any of the aforementioned methods of coupling using docking probes 508, retractable/extendable members, bolts, latches, hooks, electromagnetic or magnetic systems, to push, pull or otherwise move the servicing unit 504 on the rail system 116. While the servicing unit 504 may be configured to move passively without the assistance of the driving unit 502, as discussed, the servicing unit 504 may in some implementations include a power supply. The power supply on the servicing unit 504 may be used to power the drive system 506 and components of the servicing unit 504. Though the servicing unit 504 may be self-powered via its own power supply, it may still physically or wirelessly connect to the driving unit 502 to receive control signals from the driving unit 502.

The drive system 506 of the driving unit 502 (and in some implementations the drive system 506 of the servicing unit 504) may comprise one or more wheels 510, such as depicted in Fig. 5A to 6B. However, as will be apparent to the skilled person, any suitable means for moving on the rail system 116 may be used, such as belts, magnetic levitation, etc. The drive system 506 also comprises means to move the driving unit 502/servicing unit 504, such as a motor. For example, in example embodiment of service system 500, motors (not shown) are located inside drive system 506 to effect rotation of the one or more wheels 510. In some implementations, similar to robot 122 and 204 described herein, the driving unit 502 and/or servicing unit 504 may comprise: a first set of wheels to permit movement in one of an X and Y directions; and a second set of wheels to permit movement in the other of the X and Y directions. One or both sets of wheels can be raised or lowered to permit selective engagement of the rails, which can enable the driving unit 502 and/or the servicing unit 504 to be secured to the rail system 116, such that the driving unit 502 and servicing unit 504 can be coupled to each other, as previously discussed.

In some implementations, the driving unit 502 and/or servicing unit 504 can be operated/controlled by a person 528 in the driving unit 502. Operation/control by the person 528 can include moving the driving unit 502, moving the servicing unit 504, and moving both the driving unit 502 and servicing unit 504 when they are coupled together. The servicing unit 504 can be moved passively by control of the driving unit 502 by the person 528, or the servicing unit 504 moved independently via its own drive system 506 by control of the servicing unit 504 by the person 528. The person 528 can also control (manually or remotely) the opening and closing of doors, openings, locks, gates, equipment or tools, etc. on the servicing unit 504 and driving unit 502. In some implementations, the driving unit 502 and/or servicing unit 504 can be alternatively or additionally operated/controlled by the automated storage and retrieval system (such as processing system 400 of Fig. 4). In some implementations, processing hardware (e.g., a processor) on the driving unit 502 is used to assist the person 528 in controlling the servicing unit 504.

### A method of servicing using the service system

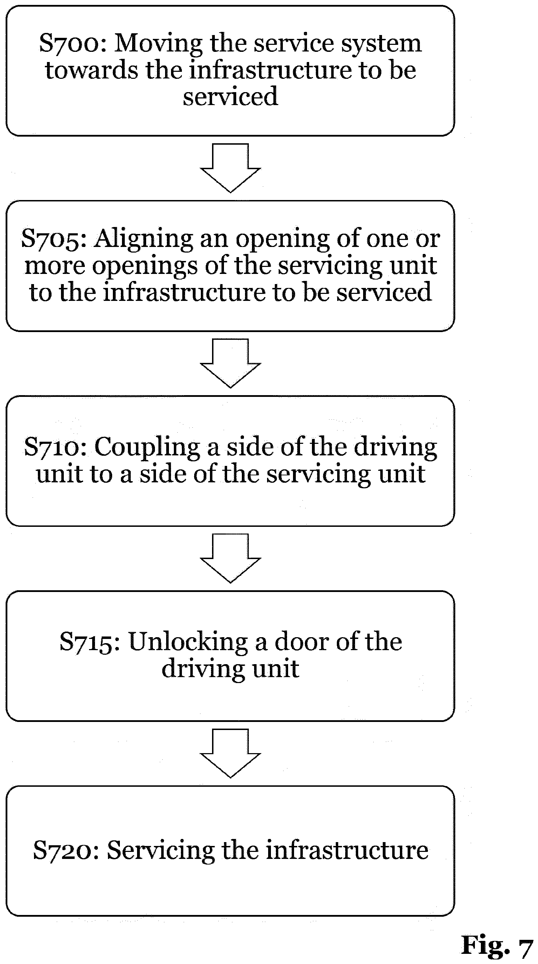

Fig. 7 shows a flow diagram of a method of servicing infrastructure of the system of Fig. 1 using the service system 500 of Fig. 5A. In some implementations, the method comprises step 700 of moving the service system 500 towards the infrastructure to be serviced. In some implementations, the method further comprises step 705 of aligning an opening 520 of one or more openings on the servicing unit 504 to the infrastructure to be serviced. In some implementations, the method further comprises step 710 of coupling a side of the driving unit 502 to a side of the servicing unit 504. In some implementations, the method further comprises step 715 of unlocking a door of the driving unit 502 for permitting movement of a person 528 between the driving unit 502 and the servicing unit 504. In some implementations, the method further comprises step 720 of servicing the infrastructure by a person 528.

Step 700 comprises moving the service system 500 towards the infrastructure to be serviced. This may comprise moving the driving unit 502 together with the servicing unit 504. As discussed, the driving unit 502 may be passively moved by the driving unit 502 while it is secured to the servicing unit 504. Or in some implementations, the driving unit 502 and the servicing unit 504 are both moving independently via their own respective drive system 506. In some implementations, this step may further comprise moving one or more driving units and one or more servicing units towards the infrastructure to be serviced. In some implementations, this step may be skipped if the service system 500 is already at the infrastructure to be serviced.

Step 705 comprises aligning an opening 520 of the one or more openings of the servicing unit 504 to the infrastructure to be serviced. Aligning may refer to positioning or re-positioning an opening 520 of the servicing unit 504 to/towards the infrastructure to be serviced. Said positioning or re-positioning of servicing unit 504 can be positioning the opening such that it is physically closest to the infrastructure to be serviced. In some implementations, the positioning or re-positioning may not be the closest but in a position that improves access for the person 528 to the infrastructure, e.g., enabling the person 528 to service the infrastructure in a better angle, position, orientation, or otherwise improve the servicing efficiency (i.e., reduce the time or effort required to complete the servicing job). It is further noted that infrastructure to be serviced refers to specific infrastructure of the automated storage and retrieval system that requires repair, maintenance, servicing, and/or monitoring. That is, infrastructure to be serviced could, in addition to remedying a fault or failure, further include inspection jobs to check the health/state of infrastructure, or refer to preventative measures such removing objects that have become dislodged in/on the rail system 116 or grid. In some implementations, step 705 can be carried out at the same time as step 700, such that as the service system 500 is moving towards the infrastructure to be serviced, the opening is simultaneously being aligned.

Step 710 comprises coupling a side of the driving unit 502 to a side of the servicing unit 504. In some implementations, this step may be skipped as the driving unit 502 may already be coupled to the servicing unit 504, such as depicted in Fig. 5A. However, in some cases, if the driving unit 502 and servicing unit 504 are separated (for example, where the servicing unit 504 is moving independently of the driving unit 502 via its own drive system 506), the driving unit 502 and servicing unit 504 can be coupled together in one or more coupling configurations. In some implementations, this step of coupling of the driving unit 502 to the servicing unit 504 is specifically coupling in a configuration in which a door/entrance on a side of the driving unit 502 overlaps with a door/entrance on a side of the servicing unit 504. It is noted while the steps in the flowchart of Fig. 7 are described in order, it will be apparent to the skilled person that the disclosed steps may be re-ordered and repeated. For instance, step 710 may be carried out before steps 700 and 705, such that the driving unit 502 and servicing unit 504 are coupled together before the service system 500 is moved. In another example, the process may include a repetition of steps 700 and 710 if the person 528 determines that a different coupling configuration can better 'align' with the infrastructure to be serviced. In this case, the driving unit 502 and/or servicing unit 504 can be moved via repetition of step 700 and subsequently coupled together in the new coupling configuration via repetition of step 710.

Step 715 comprises unlocking a door of the driving unit 502 for permitting movement of a person 528 between the driving unit 502 and the servicing unit 504. In some implementations, if the driving unit 502 has a door, this step can further comprise unlocking the door. In some implementations, carrying out step 715 requires step 710 to have occurred before hand, to ensure the safety of the person 528. In some further implementations, step 715 may additionally require the door of the driving unit 502 to be overlapping with the entrance of the servicing unit 504 for step 715 to be carried out. This prevents the person 528 from stepping out onto the grid when the units are not coupled, or when the door and entrance are not overlapping.

In some implementations, prior to unlocking the door of the driving unit 502, the robot 122, 204 may be received by the servicing unit 504 automatically, by opening the door, as shown in Fig. 5B when sensors on the servicing unit 504 detect that the robot 122, 204 is at the opening 520. Next, the opening 520 may close when the robot 122, 204 is detected to be fully situated in the first area 522, via e.g., another set of sensors, as shown in Fig. 5C. Finally, the first door 512 may be unlocked.

Step 720 comprises servicing the infrastructure by a person 528. This step can further include specific steps, such as one or more of: moving to the door of the driving unit 502, opening the door of the driving unit 502 (manually by the person 528, or remotely) and entering the servicing unit 504.

The aforementioned steps can be carried out completely manually (e.g., via control of the driving unit 502 and servicing unit 504 by a person 528), completely automatically (e.g., via control by the storage and retrieval system or processing hardware on board the driving unit 502), or a combination between manual and automation, i.e., a method of servicing that is partially manual/partially automated. For example, door opening and closing on the driving unit 502 could be manual, while door opening and closing on the servicing unit 504 could be automatic. In another example, the operation/control of the gates and the openings may be automatic. By carrying out specific steps by the person 528 compared to carrying them out automatically by the storage and retrieval system (e.g., processing system 400 of Fig. 4) or by the aforementioned processing hardware, the safety of the person 528 is improved as more control is provided to the person 528. On the other hand, involving the storage and retrieval system or the processing hardware on the driving unit 502 to assist in and/or fully take over the aforementioned steps 700-715, can enable servicing to be carried out more efficiently with less human intervention/attention required.

In another example, steps 700-720 could be performed in reverse, to return the service system 500 back to a starting point after completing servicing of the infrastructure to be serviced. For instance, to return the service system 500 back to the starting point after step 720, after the person 528 returns to the driving unit 502 from the servicing unit 504 the door may be locked, the driving unit 502 may be optionally decoupled from the servicing unit 504, and the service system 500 may be moved back to the starting point. In some implementations, the method disclosed in Fig. 7 can be carried out multiple times to service different infrastructure. In some implementations, where there are more than one servicing units that are each adapted to servicing different infrastructure, the driving unit 502 may select the most suitable servicing unit 504. This selection step may be optionally carried out between step 700 and 705. As will be apparent to the skilled person, steps in the method of Fig. 7 may be re-arranged, modified and repeated.

### Locking assemblies and mechanisms

The one or more doors of the driving unit 502 and/or servicing unit 504 may comprise a mechanical lock assembly; an electric lock assembly; and/or an electric and mechanical combination lock assembly. Such lock assemblies may be controlled and, in some cases, manually or remotely locked and unlocked, as previously discussed. The driving unit 502 comprises the following lock assemblies, however, as will be apparent to the skilled person, the servicing unit 504 can additionally or alternatively implement such lock assemblies as well when the servicing unit 504 comprises a door.

With reference to Fig. 8A to 10E, a first mechanical lock assembly (Fig. 8A-8D), a second mechanical lock assembly (Fig. 9A-9E), and an electrical and mechanical lock assembly (Fig. 10A to 10E) will now be described.

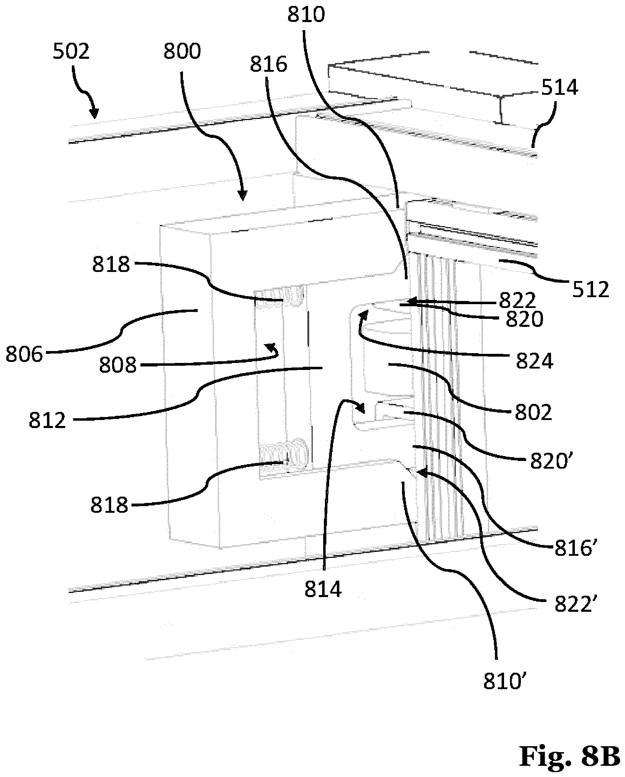

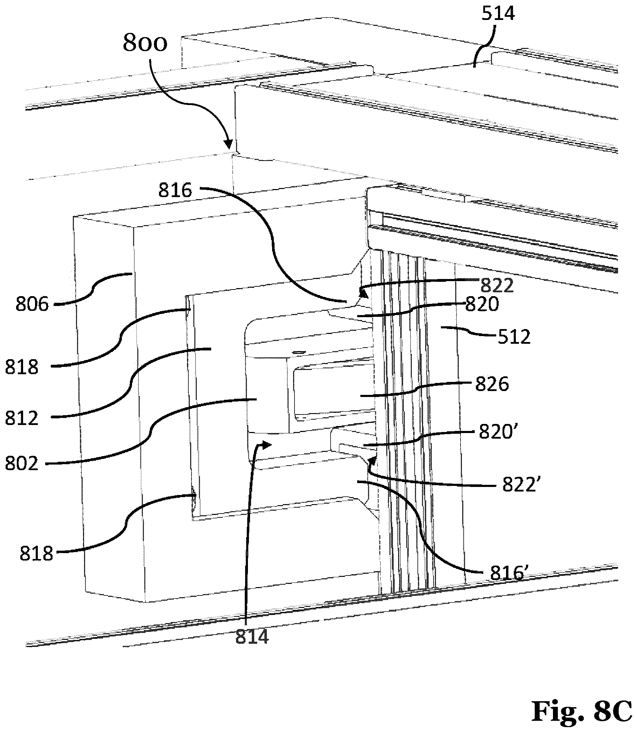

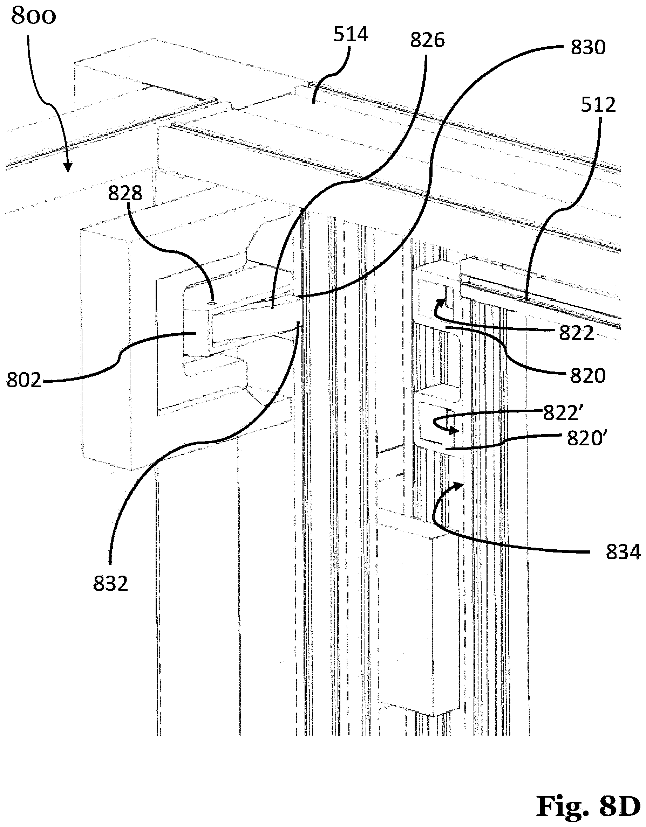

Fig. 8A shows a first mechanical lock assembly/mechanism 800 of the service system 500 of Fig. 5A (and 5E). Fig. 8B, 8C, and 8D shows the operation of the lock assembly 800 of Fig. 8A. As will be detailed below, the first mechanical lock assembly uses a docking probe 508 to simultaneously couple the driving unit 502 to the servicing unit 504 and correspondingly lock/unlock the door of the driving unit 502. The first lock assembly 800 comprises: a fixed outer member 806 connected to a wall of the driving unit 502; an inner member 812 at least partially enclosed by the outer member 806, wherein the inner member 812 is: movable by a docking probe 802 towards the outer member 806 to unlock the first door 512 when coupling the driving unit 502 and the servicing unit 504 together; and movable away from the outer member 806 to lock the first door 512 when decoupling the driving unit 502 and servicing unit 504 from each other. That is, when the docking probe 802 is received into the first lock assembly 800, the door is unlocked, while when the docking probe 802 is removed from the first lock assembly 800, the door is unlocked.

In some implementations, the docking probe 802 includes a pretensioned latch 826 that prevents the retreat of the docking probe 802 when the docking probe 802 is inserted into the first lock assembly 800 (as a result of the pretensioned latch 826 increasing the cross-sectional area the docking probe 802), wherein when the latch is depressed the docking probe 802 returns to its original cross-section area allowing the docking probe 802 to retreat from the first lock assembly 800. In some implementations, the abutting of a door of the driving unit 502 (or servicing unit 504) against the first lock assembly 800 can trigger depression of the pretensioned latch 826.

More specifically, Fig. 8A shows a perspective view of driving unit 502 and a first side 516 of servicing unit 504. A person 528 is positioned within driving unit 502. The door 512 on the first face 514 of the driving unit 502 is a sliding door, which comprises a handle 804 to ease opening and closing of the doors. The servicing unit 504 has a docking probe 802 on the outer surface of the first side 516 of the servicing unit 504. The docking probe 802 is arranged at the same height as the first lock assembly 800. The docking probe 802 is shaped to be inserted into the first lock assembly 800 to couple the driving unit 502 and the servicing unit 504 to each other.

Fig. 8B is an enlarged view of Fig. 8A showing details of the first lock assembly 800 when the door 512 is locked preventing movement of the driving unit 502 and servicing unit 504. The first lock assembly 800 comprises an outer member 806 having a U-shape forming a receiving portion 808 of the outer member 806. The two ends of the outer member 806 (indicated as outer upper end 810 and outer lower end 810') are securely connected to the inside of the first side 514 of the driving unit 502. The first lock assembly 800 further comprises an inner member 812 movable within the receiving portion 808 of the outer member 806. The inner member 812 having a U-shape forming a receiving portion 814 of the inner member 812 oriented in the same direction as the outer member 806. The U-shape of the inner member 812 has an upper end 816 and lower end 816'. The inner member 812 is connected to the outer member 806 by springs 818 which exert a force on the inner member 812 towards the first wall 514 of the driving unit 502. The first lock assembly 800 comprises lock members 820, 820'. The lock members 820, 820' protrude sideways as an extension of the first door 512 of the driving unit 502 and each comprises an opening 822, 822' such that each of the lock members 820, 820' is configured to receive the respective upper end 816 and lower end 816' of the inner member 812 such that the first door 512 of the driving unit 502 is locked when the inner member 812 is in the extended position (towards the first wall 514) as shown in Fig. 8B. The first wall 514 of the driving unit 502 has a hole 824 of sufficient size to allow insertion of the docking probe 802. The hole 824 may be flush with the receiving portion 814 of the inner member 812.

In Fig. 8C, the docking probe 802 has partially entered into the first lock assembly 800. This can be seen when comparing the extension of the docking probe 802 in the receiving portion 814 of the inner member 812 and the compression of the springs 818. As shown in Fig. 8C, the movement of the inner member 812 towards the outer member 806 (i.e., moving away from the first wall 514 of the driving unit 502) moves the upper end 816 and lower end 816' of the inner member 812 out of the openings 822, 822' of the lock members 820, 820' causes the first door 512 to be unlocked (and opened).

Fig. 8C shows that the door may be opened before the pretensioned latch 826 is extended, however, in some implementations the upper end 816 and lower end 816' of the inner member 812 are longer, requiring the pretensioned latch 826 to be extended (as shown in Fig. 8D) when the docking probe 802 is fully inserted into the locking assembly 800 before the door can be unlocked and opened.

The docking probe 802 comprises a pretensioned latch 826 which is pivotably arranged at pivot point 828 (see Fig. 8D) inside the docking probe 802. The pretensioned latch 826 may be pretensioned by a spring or similar. When a force is not exerted on the pretensioned latch 826, the latch is extended, increasing the cross-sectional area of the docking probe 802. When a force is exerted on the pretensioned latch 826 (as shown in Fig. 8C), the pretensioned latch 826 is retracted, returning the cross-sectional area to the original cross-sectional area of the docking probe 802, thereby allowing the docking probe 802 to retreat from the first lock assembly 800.

In Fig. 8D, the docking probe 802 has fully entered into the first lock assembly 800. Fig. 8D shows the final locking step in which the latch of the pretensioned latch 826 is extended to prevent the docking probe 802 from being retreated/released from the first lock assembly 800. In particular, as shown in Fig. 8D, a back end 830 of the pretensioned latch 826 is abutting the first face 514 of the driving unit 502, preventing the docking probe 802 from being retracted unless a force is exerted on the shaded area 832 of the pretensioned latch 826 by the end face 834 of the first door 512 of the driving unit 502. When the aforementioned steps are carried out in reverse, the action of closing the first door 512 abuts the end face 834 against the pretensioned latch 826, exerting a force on the pretensioned latch 826 causing it to retract, thereby allowing the docking probe 802 to retreat from the lack assembly 800.

Fig. 9A shows a second mechanical lock assembly/mechanism of the service system 500 of Fig. 5A and 5E. As will be detailed below, like the first mechanical lock assembly, the second mechanical lock assembly uses a docking probe 902 to simultaneously couple the driving unit 502 to the servicing unit 504 and correspondingly lock/unlock the door of the driving unit 502. The second lock assembly comprises: a fixed outer member 806 connected to a wall of the driving unit 502; an inner member 812' at least partially enclosed by the outer member 806, wherein the inner member 812' is: movable by a docking probe 902 towards the outer member 806 to unlock the first door 512 when coupling the driving unit 502 and the servicing unit 504 together; movable away from the outer member 806 to lock the first door 512 when decoupling the driving unit 502 and servicing unit 504 from each other, and comprises a wedge member 912 that is engaged (by the docking probe 902 when inserted) to move the wedge member 912 into a space between the docking probe 902 and the inner member 812' to restrict movement of the docking probe 902. That is, when the docking probe 902 is received into the second lock assembly, the door is unlocked (and openable) and the wedge member 912 is engaged to restrict the docking probe 902 from retreating from the second lock assembly. Then, when the door is closed, the closing of the door disengages the wedge member 912, thereby allowing the docking probe 902 to be retreated from the second lock assembly.

In some implementations, the docking probe 902 may further include a pretensioned latch 826, like in Fig. 8A to 8D, that prevents the retreat of the docking probe 902 when the docking probe 902 is inserted into the second lock assembly. In some implementations, the wedge member 912 of the second lock assembly prevents the docking probe 902 from retreating/moving using a friction fit or interference fit between the wedge member 912 and the space (between the docking probe 902 and the inner member 812').

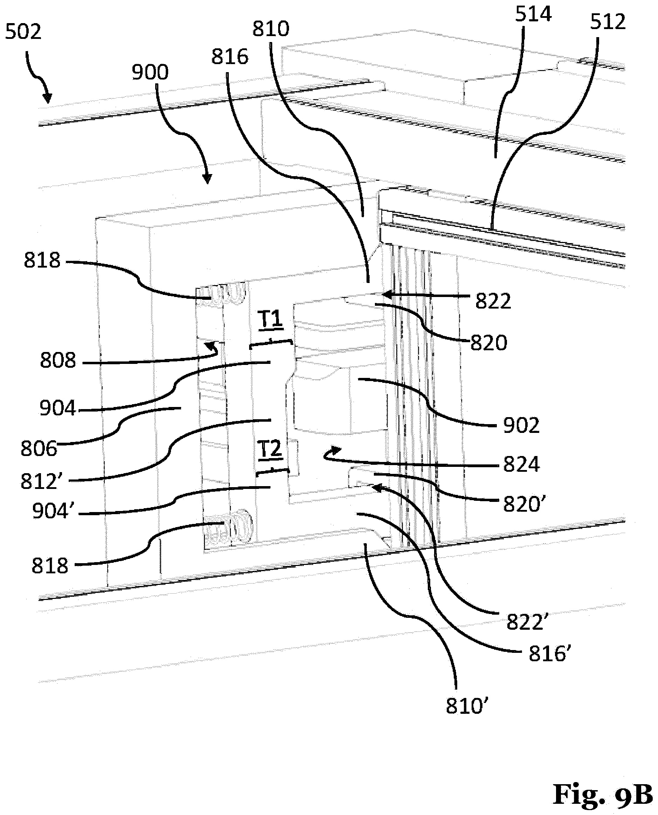

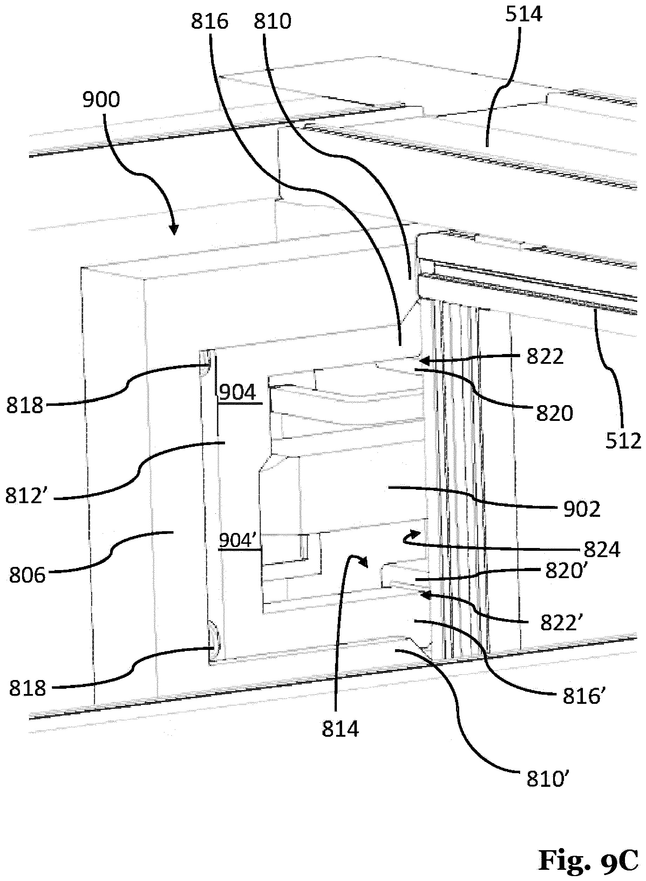

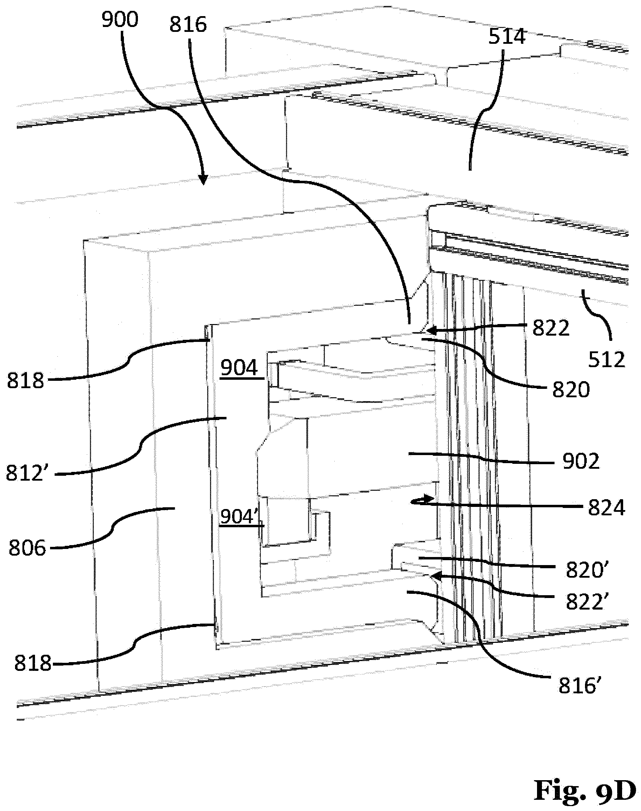

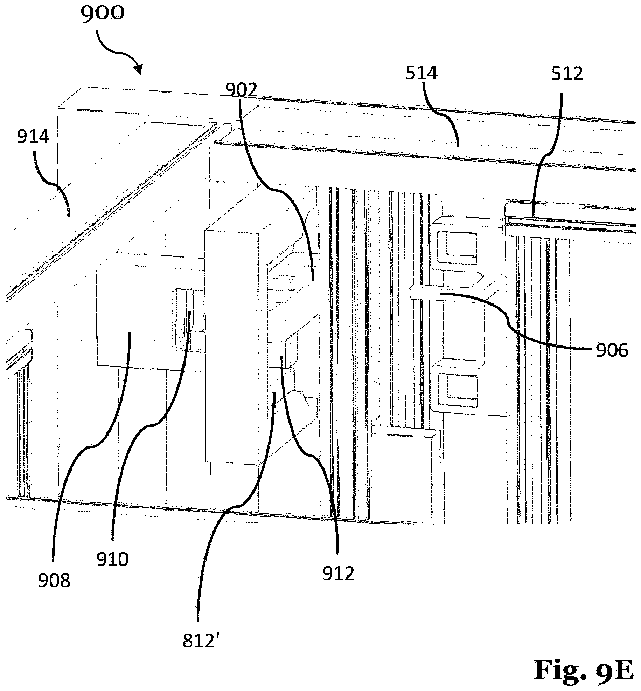

In some implementations, wherein the driving unit 502 and/or servicing unit 504 comprises a first set of wheels to permit movement in one of an X and Y directions; and a second set of wheels to permit movement in the other of the X and Y directions, and wherein one or both sets of wheels can be raised or lowered to permit selective engagement of the rails, the docking probe 902 can be selectively engaged with the inner member 812' at different heights. In some further implementations, the inner member 812' comprises an upper part and a lower part, wherein the thickness of the upper part is greater than the lower part, such that when the wedge member 912 is engaged, vertical movement of the driving unit 502 and/or servicing unit 504 (via raising or lowering of the one or more sets of wheels) is prevented. In this way, the docking probe 902 cannot retreat from the second lock assembly. This specific embodiment will now be described with reference to Fig. 9A, 9B, 9C, 9D and 9E.

More specifically, Fig. 9A shows a perspective view of driving unit 502 and a first side 516 of servicing unit 504. The depicted elements in the perspective view are substantially the same as those depicted in Fig. 8A, however a different docking probe 902, which does not include the pretensioned latch 826 is depicted. Additionally, a different lock assembly, a second lock assembly 900, is depicted instead.

Fig. 9B is an enlarged view of Fig. 9A showing details of the second lock assembly 900 when the door 512 is locked preventing movement of the driving unit 502 and servicing unit 504. The second lock assembly 900 is substantially the same as the first lock assembly 800, however, the inner member 812' of the second lock assembly 812' which is in contact with the springs 818 has an upper part 904 with a first thickness T1 and a lower part 904' with a second thickness T2. The first thickness T1 is thicker than the second thickness T2 (T1>T2).

In Fig. 9C, the docking probe 902 has partially entered into the second lock assembly 900. This can be seen when comparing the extension of the docking probe 902 and the compression of the springs 818.

Fig. 9C shows that the door may be opened before the docking probe 902 is fully inserted, however, in some implementations the upper end 816 and lower end 816' of the inner member 812' are longer, requiring the docking probe 902 to be in contact with the upper part 904 (as shown in Fig. 9D) before the door can be unlocked and opened.

In Fig. 9D, the driving unit 502 is lowered relative to the servicing unit 504 using, e.g., a track shift, supports, or a wheel lift mechanism. In some implementations, the servicing unit 504 may instead be raised using, e.g., a track shift, supports, or a wheel lift mechanism, such that the driving unit 502 is at a lower height relative to the servicing unit 504. As depicted in Fig. 9D, the position of the docking probe 902 is now in contact with the upper part 904. As a result, as the upper part 904 which has greater thickness the lower part 904', the springs 818 connecting the inner member 812' to the outer member 806 are compressed which moves the upper end 816 and lower end 816' of the inner member 812' out of the openings 822, 822' of the lock members 820, 820'. This unlocks the first door 512 and enables it to be opened.

Fig. 9E shows the final locking step in which the wedge member 912 prevents the docking probe 902 to be retreated from the second lock assembly 900. With reference to Fig. 9E, a push member 906 is depicted at the end portion of the first door 512 close to the second lock assembly 900. The push member 906 follows the movement of the first door 512. The push member 906 is configured to exert a force on a locking member 908. The locking member 908 is connected to another side 914 of the driving unit 502 on the opposite side of the second lock assembly 900 (with respect to the push member 906). The locking member 908 can be pretensioned by for example a lock spring 910. As illustrated, the locking member 908 and the push member 906 can come into contact above the docking probe 902. The locking member 908 has a wedge member 912 arranged at or below a lowermost elevation of the docking probe 902 such that when the first door 512 is locked, the wedge member 912 is arranged to the side of the docking probe 902 and cannot influence vertical movement of the second lock assembly 900 relative the docking probe 902, and when the first door 512 is unlocked, the wedge member 912 is arranged between the docking probe 902 and the inner member 812' such that it prevents vertical movement of the second locking assembly 900 relative the docking probe 902. As such, it is not possible to raise the driving unit 502 upwards due to the docking probe 902 being restricted by the wedge member 912. When the aforementioned steps are carried out in reverse and the first door 512 is closed, the closing of the first door 512 causes the push member 906 overcome the force of the lock spring 910, causing the locking member 908 and thus the wedge member 912, to move to the left out of contact with the docking probe 902. Accordingly, the driving unit 502 can then be raised, such that, e.g., its wheels 510 are in contact with the rails system 116, allowing the docking probe 902 to be released from the second lock assembly 900.

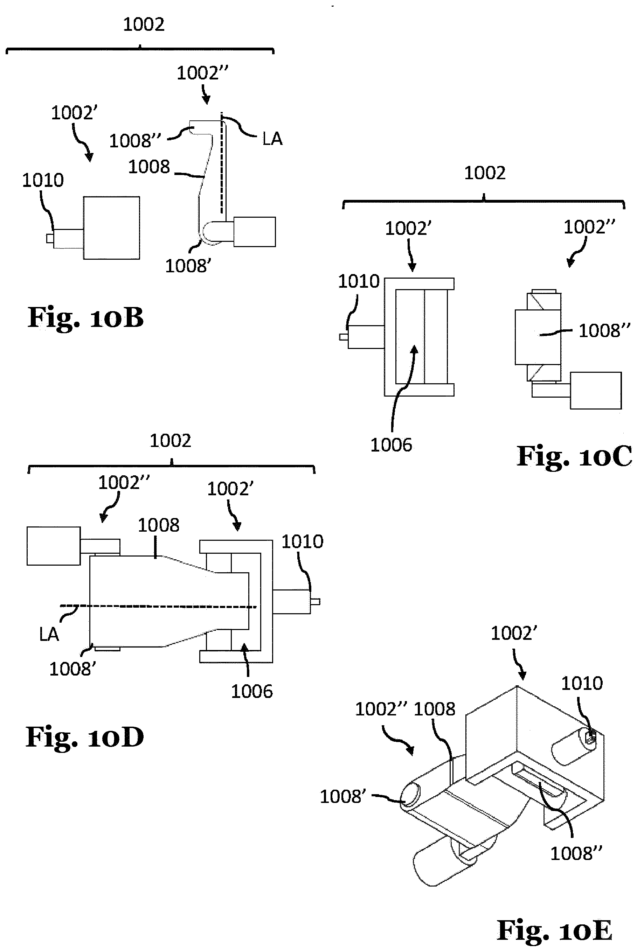

Fig. 10A shows a mechanical and electrical combination locking mechanism/system 1000 of the service system 500 of Fig. 5A and 5E. Fig. 10B to 10E shows the components of the mechanical and electrical locking mechanism 1000 of Fig. 10A. More specifically, Fig. 10A shows a side view of driving unit 502 with a mechanical and electrical locking mechanism 1000 by combining a mechanical lock 1002 with an electrical lock 1004. In some implementations, when in an unlocked state, the mechanical 1002 and electrical locks 1004 are flush with the first wall 514 of the driving unit 502. The electrical lock 1004 can be an electromagnetic lock, or any suitable lock that can be activated and deactivated (locked and unlocked) electronically. The mechanical and electrical combination lock 1000 works by forming "a local state recognition system", in which the mechanical lock 1002 can communicate directly with electrical lock 1004, such that electrical lock 1004 may only be unlocked once it is confirmed that the mechanical lock 1002 is in a locked state (in which the driving unit 502 and servicing unit 504 are coupled together using the mechanical lock 1002). Accordingly, safety is improved by requiring a first (mechanical lock 1002) to be activated before the second (electrical lock 1004) can be activated. As will be apparent to the skilled person, other sensors 1010 such as infrared, mm-wave, laser, etc., can be used to detect the state of the mechanical lock 1002, and the mechanical lock state can be communicated directly to the electrical lock 1004 according to the systems and methods described herein.

Fig. 10B to 10E depict detailed views of a locking sequence of the mechanical lock 1002. Fig. 10B and 10C are different views of the mechanical lock 1002 in an unlocked state, and Fig. 10D and 10E are different views of the mechanical lock 1002 in a locked state. The mechanical lock 1002 comprises a first part 1002' and a second part 1002". The first part 1002' can be mounted on the servicing unit 504 and the second part 1002" can be mounted on the driving unit 502. In the illustrated example, the first part 1002' comprises a recess or opening 1006. The second part 1002" comprises a pivotable locking arm 1008. The pivotable locking arm 1008 has the pivot connection in a first end 1008' thereof and comprises a protrusion in a second end 1008" thereof. The protrusion is complementary shaped relative to the recess or opening 1006 of the first part 1002' such that when the pivotable locking arm 1008 pivots from the unlocked state (see Fig. 10B and 10C where a longitudinal axis LA of the locking arm 1008 is mainly vertical) to the locked state (see Fig. 10D and 10E where a longitudinal axis LA of the locking arm 1008 is mainly horizontal), the protrusion in the second end 1008" of the locking arm 1008 enters the recess or opening 1006 in the first part 1002' and physically prevents the driving unit 502 from moving relative the servicing unit 504. The first part 1002' may comprise a sensor 1010 for detecting proximity of the servicing unit 504. Alternatively, the first part 1002' can be mounted on the servicing unit 504 and used to detect the proximity of the driving unit 502.

### Penultimate comments

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A service system for servicing an automated storage and retrieval system, wherein the service system comprises:
a driving unit comprising a drive system for moving the driving unit on rails of a rail system; and
a servicing unit configured to move on the rails of the rail system,
wherein the driving unit and the servicing unit are configured to be removably coupled to one another,
wherein the driving unit comprises a first door on a first side of the driving unit,
wherein the servicing unit comprises a first entrance on a first side of the servicing unit,
wherein the first door of the driving unit and the first entrance of the servicing unit are configured to overlap when the first side of the driving unit is coupled to the first side of the servicing unit,
wherein the first door of the driving unit is configured to lock when the driving unit is not coupled to the servicing unit,
wherein the first door of the driving unit is configured to unlock when the first side of the driving unit is coupled to the first side of the servicing unit for permitting movement of a person between the driving unit and the servicing unit, and
wherein the servicing unit has one or more openings suitable for servicing infrastructure of the automated storage and retrieval system.

2. The service system of any preceding claim, wherein the first entrance of the servicing unit comprises a door, wherein optionally, the door is configured to unlock when the first side of the driving unit is coupled to the first side of the servicing unit.

3. The service system of any preceding claim, wherein one of the one or more openings are suitable for receiving a robot from the rail system.

4. The service system of any preceding claim, wherein the driving unit comprises a second door on a second side of the driving unit and the servicing unit comprises a second entrance on a second side of the servicing unit.

5. The service system of claim 4, wherein the second door and the second entrance are configured to overlap when the second side of the driving unit is coupled to the second side of the servicing unit.

6. The service system of any preceding claim, wherein the servicing unit is configured to move passively on the rails of the rail system via pushing or pulling of the servicing unit by the driving unit.

7. The service system of any preceding claim, wherein the servicing unit is configured to drive on the rails of the rail system using power and control signals received from the driving unit.

8. The service system of any preceding claim, wherein the servicing unit is configured to drive on the rails of the system using power from the servicing unit and control signals received wirelessly from the driving unit.

9. The service system of any preceding claim, wherein the servicing unit is self-powered and receives control signals wirelessly from the driving unit.

10. The service system of any preceding claim, wherein the servicing unit comprises a first area and a second area, wherein the first area is configured as a vehicle pen for holding the robot on the rail system, wherein the second area is a platform for receiving the robot from the first area and off the rail system.

11. The service system of claim 10, wherein the servicing unit comprises a first gate to control passage of the robot from outside the servicing unit into the first area, and a second gate to control passage of the robot from the first area to the second area.

12. The service system of any preceding claim, wherein the driving unit and the servicing unit comprises:
a first set of wheels to permit movement in one of an X and Y directions; and
a second set of wheels to permit movement in the other of the X and Y directions.

13. The service system of any preceding claim, wherein the first door of the driving unit is locked using one or more of:
a mechanical lock assembly;
an electric lock assembly; and
an electric and mechanical combination lock assembly.

14. The service system of any preceding claim, wherein the driving unit and/or servicing unit comprises one or more docking probes for coupling the driving unit and the servicing unit to one other.

15. A method of servicing infrastructure of an automated storage and retrieval system using a service system, the service system comprising:
a driving unit comprising a drive system for moving the driving unit on rails of a rail system; and
a servicing unit configured to move on the rails of the rail system,
wherein the driving unit and the servicing unit are configured to be removably coupled to one another,
wherein the driving unit comprises a first door on a first side of the driving unit,
wherein the servicing unit comprises a first entrance on a first side of the servicing unit, and
wherein the first door of the driving unit and the first entrance of the servicing unit are configured to overlap when the first side of the driving unit is coupled to the first side of the servicing unit,
the method comprising:
moving the service system towards the infrastructure to be serviced;
aligning an opening of one or more openings of the servicing unit to the infrastructure to be serviced;
coupling the first side of the driving unit to the first side of the servicing unit; and
unlocking the first door of the driving unit.
